Europäisches Patentamt

European Patent Office

Office européen des brevets

(19)

(11) Veröffentlichungsnummer: **0 059 245**
**B1**

# (12) EUROPÄISCHE PATENTSCHRIFT

(45) Veröffentlichungstag der Patentschrift:
**03.07.85**

(21) Anmeldenummer: **81108735.2**

(22) Anmeldetag: **22.10.81**

(51) Int. Cl.⁴: **H 02 P 1/26,** H 02 K 3/28

(54) **Teilwicklungsschaltung zum Anfahren von Drehstrommotoren.**

(30) Priorität: **27.02.81 DE 3107654**

(43) Veröffentlichungstag der Anmeldung:
**08.09.82 Patentblatt 82/36**

(45) Bekanntmachung des Hinweises auf die Patenterteilung:
**03.07.85 Patentblatt 85/27**

(84) Benannte Vertragsstaaten:
**DE FR GB IT**

(56) Entgegenhaltungen:
**AT - B - 144 757**
**DE - A - 1 638 350**
**DE - C - 280 052**
**DE - C - 693 695**
**US - A - 3 187 245**

(73) Patentinhaber: **Siemens Aktiengesellschaft, Berlin und München Wittelsbacherplatz 2, D-8000 München 2 (DE)**

(72) Erfinder: **Ghosh, Shyamal-Krishna, Dipl.-Ing., Hohenrother-Strasse 22, D-8740 Bad Neustadt/Saale (DE)**

## Beschreibung

Die Erfindung betrifft eine Teilwicklungsschaltung zum Anfahren von Drehstrommotoren, bei der die als Einschichtwicklung ausgeführte Motorwicklung in nacheinander einschaltbare Teilwicklungen unterteilt ist, wobei die zu der zuerst einschaltbaren Teilwicklung gehörenden Spulen zu mindestens zwei gleichen Parallelzweigen zusammengeschaltet sind und zur Vermeidung eines einseitig auf den Läufer wirkenden magnetischen Zuges räumlich entsprechend symmetrisch versetzt sind, bei welcher Schaltung ferner die zu einer später einschaltbaren Teilwicklung gehörenden Spulen zu mindestens einem weiteren Parallelzweig zusammengeschaltet sind, wobei dieser oder diese Parallelzweige die gleiche Windungszahl wie die Parallelzweige der zuerst einschaltbaren Teilwicklung aufweisen.

Eine solche Teilwicklungsschaltung ist durch die DE-C-693 695 zum Anfahren eines hochpoligen Motors bekannt. Bei dieser bekannten Schaltung ist die Motorwicklung in drei Teilwicklungen unterteilt, wobei jede Teilwicklung aus einem Drittel der Motorwicklung besteht. Die Teilwicklungen sind so zusammengeschaltet, dass jede Teilwicklung ein Drittel der Pole der Maschine erregt, wobei die jeweils erregten Pole um 180° räumlich versetzt sind. Hierdurch wird ein einseitiger magnetischer Zug auf den Läufer vermieden. Eine solche Art der Teilwicklungsschaltung ist nur bei Motoren mit einer Polpaarzahl $p \geq 12$ durchführbar. Da weiterhin jeweils nur ein Drittel der Pole erregt wird, würde der Motor auf eine gegenüber seiner Nenndrehzahl höhere Drehzahl beschleunigt. Aus diesem Grunde muss bei der bekannten Teilwicklungsschaltung die Zuschaltung der weiteren Teilwicklungen überwacht und zu der richtigen Zeit vorgenommen werden.

Der Erfindung liegt die Aufgabe zugrunde, eine Teilwicklungsschaltung der eingangs beschriebenen Art so weiterzubilden, dass sie diese Nachteile nicht aufweist.

Die Lösung der gestellten Aufgabe gelingt nach der Erfindung dadurch, dass die Motorwicklung eine ungerade Nutzahl (Nuten pro Pol und Phase) von $q > 1$ aufweist und in nur zwei Teilwicklungen aufgeteilt ist, von denen die zuerst einschaltbare Teilwicklung je Phasenstrang mehr als die Hälfte der Spulen umfasst und dass die jeweils einen Parallelzweig bildenden Spulen oder dass die Parallelzweige der zuerst einschaltbaren Teilwicklung und die den (die) Parallelzweig(e) der später einschaltbaren Teilwicklung bildenden Spulen untereinander räumlich um $360°/p$ versetzt sind, wobei p die Polpaarzahl des Motors ist.

Da die stromdurchflossenen Spulen um $360°/p$ versetzt sind, sind alle Pole der Maschine erregt, so dass auch bei nur teilweise eingeschalteter Wicklung der Motor auf die gleiche Drehzahl beschleunigt wird, wie bei voll eingeschalteter Wicklung. Die Zuschaltung der weiteren Teilwicklung ist somit nicht mehr zeit- oder drehzahlabhängig. Ausserdem entsteht kein einseitiger magnetischer Zug. Ferner kann die beschriebene Teilwicklungsschaltung bei Motoren mit einer Polpaarzahl $p \geq 2$ angewendet werden. Die Einschaltung von mehr als der Hälfte der Spulen führt weiterhin zu einer entsprechend starken Reduzierung des Anlaufstromes, so dass eine thermische Überbelastung während des Anlaufes vermieden wird. Die Höhe des Anlaufstromes bleibt dabei auch unter dem Wert, der durch den Blokkierschutz des Motors vorgegeben ist.

Bei einem vierpoligen Motor mit einer Nutzahl $q = 3$ wird volle Symmetrie beim Anlauf und dem Betrieb auf einfache Weise dadurch erreicht, dass die zuerst einschaltbare Teilwicklung aus zwei Parallelzweigen von je zwei in Reihe geschalteten Spulen besteht und die beiden restlichen, die später einschaltbare Teilwicklung bildenden Spulen ebenfalls in Reihe und als dritter Zweig zu den beiden Zweigen der zuerst einschaltbaren Teilwicklung parallelgeschaltet sind.

Anhand eines in der Zeichnung dargestellten Ausführungsbeispiels wird der Anmeldungsgegenstand nachfolgend näher beschrieben. Es zeigt jeweils in einphasiger Darstellung

Fig. 1 ein Wickelschema einer Teilwicklungsschaltung für einen vierpoligen Motor mit einer Nutzahl $q = 3$,

Fig. 2 ein elektrisches Schaltbild der in Fig. 1 dargestellten Teilwicklungsschaltung,

Fig. 3 ein Wickelschema einer Teilwicklungsschaltung für einen sechspoligen Motor mit $q = 3$ und

Fig. 4 ein Wickelschema einer weiteren Teilwicklungsschaltung für einen sechspoligen Motor mit $q = 5$.

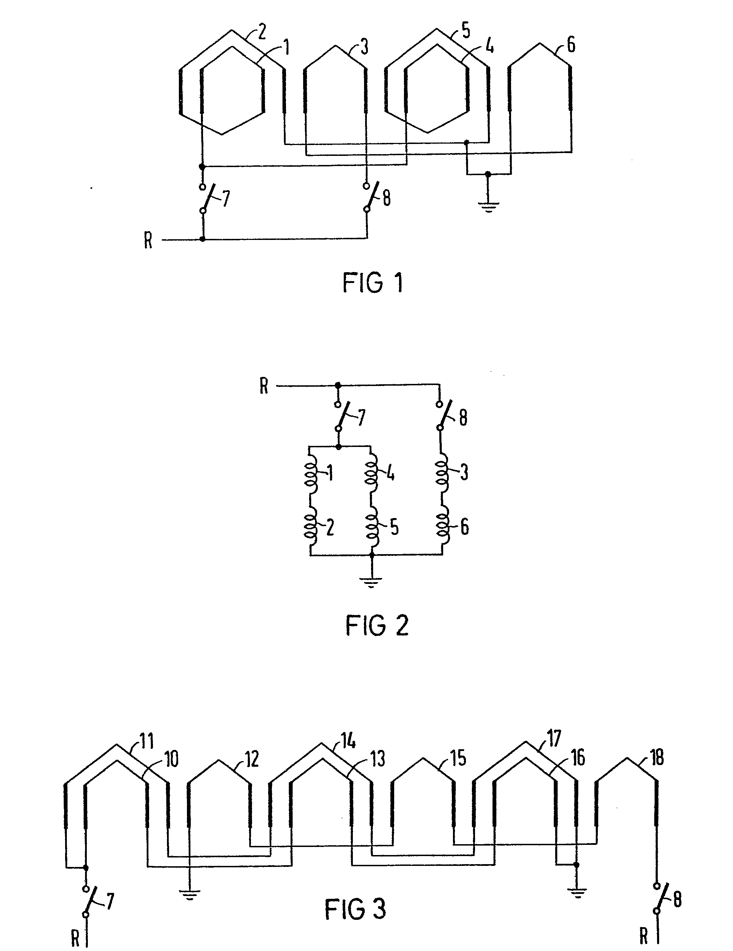

Bei dem in Fig. 1 dargestellten Wickelschema sind die dem einen Polpaar zugeordneten Spulen 1 und 2 und die dem anderen Polpaar zugeordneten Spulen 4 und 5 jeweils in Reihe geschaltet. Beide Spulengruppen sind zueinander parallelgeschaltet und bilden die zuerst einschaltbare Teilwicklung. Über einen ersten Schalter 7 wird diese Teilwicklung mit ihrem einen Anschluss an die Netzphase R geschaltet. Der andere Anschluss der Teilwicklung ist mit dem entsprechenden Anschluss der Teilwicklung der anderen Phasen zu einem Sternpunkt zusammengeschlossen.

Die beiden übrigen Spulen 3 und 6 sind ebenfalls in Reihe geschaltet. Diese Reihenschaltung wird über einen zweiten Schalter 8, der beim Anlauf des Motors zeitlich nach dem ersten Schalter 7 angeschlossen wird, zu den aus den Spulen 1 und 2 sowie 4 und 5 gebildeten Parallelzweigen parallelgeschaltet.

Wie aus Fig. 2 zu ersehen ist, sind im Betrieb drei Parallelzweige vorhanden, von denen jeder zwei in Reihe liegende Spulen enthält. Die Parallelzweige sind somit untereinander gleich.

Zum Anfahren des Motors wird der Schalter 7 geschlossen. Die Spulen 1 und 2 sowie 4 und 5 erhalten damit Spannung und der Motor kann anlaufen. Da die Spulen 1 und 2 gegenüber den Spulen 4 und 5 um $360°/p$, d.h. bei einem vierpoligen Motor, räumlich um $180°$ versetzt sind, heben sich die auf den Läufer einwirkenden magnetischen Kräfte auf. Während des Anlaufes sind zwei Drittel der Spulen eingeschaltet. Damit kann der Motor ein entsprechend hohes Anlaufmoment entwickeln, so dass ein sicherer Anlauf gewährleistet ist. Später wird der Schalter 8 geschlossen. Der Motor geht dadurch ohne Stromunterbrechung von der Anlaufphase in die Betriebsphase über.

Bei dem in Fig. 3 für einen sechspoligen Motor dargestellten Wickelschema sind jeweils die verschiedenen Polpaaren zugeordneten Spulen 10, 13, 16 bzw. 11, 14, 17 miteinander in Reihe geschaltet. Beide Spulengruppen bilden die beim Anlauf zuerst einschaltbare Teilwicklung. Über den Schalter 7 werden diese beiden Spulengruppen parallel an die Netzphase R geschaltet.

Die übrigen Spulen 12, 15, 18 sind ebenfalls in Reihe geschaltet und bilden die später über den Schalter 8 zuzuschaltende Teilwicklung. Durch den Schalter 8 wird diese Spulengruppe wiederum zu den beiden aus den Spulengruppen 10, 13, 16 und 11, 14, 17 bestehenden Parallelzweigen parallelgeschaltet.

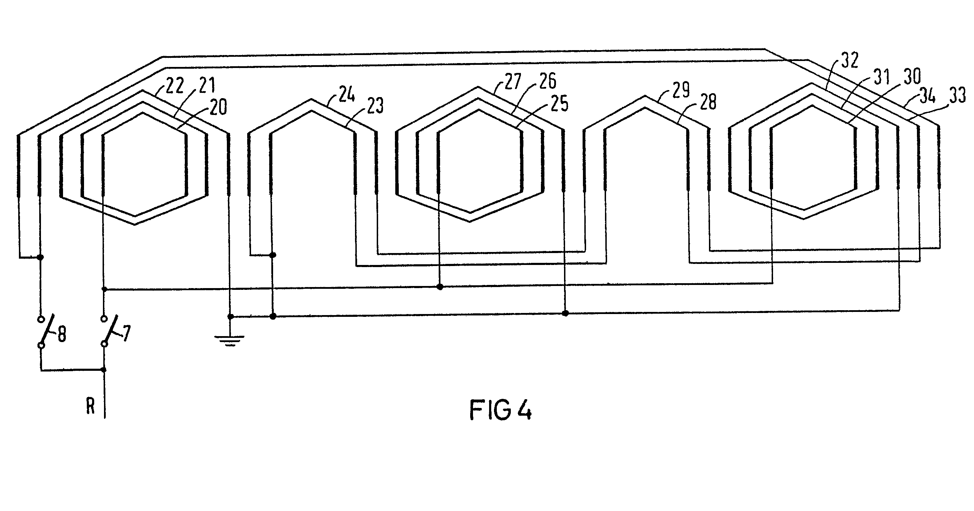

In Fig. 4 sind wieder die je einem Polpaar zugeordneten Spulen 20 bis 22 bzw. 25 bis 27 bzw. 30 bis 32 in Reihe geschaltet. Über den Schalter 7 werden diese drei Spulengruppen parallel an die Netzphase R gelegt. Die zuerst einschaltbare Teilwicklung besteht in diesem Falle aus drei Parallelzweigen, in denen jeweils drei Spulen in Reihe geschaltet sind. Die drei Spulengruppen sind so ausgewählt, dass sie um 360°/p, d.h. bei einer sechspoligen Maschine räumlich um 120° gegeneinander versetzt sind. Die auf den Läufer wirkenden magnetischen Zugkräfte heben sich auch in diesem Falle auf.

Die Schaltung der übrigen Spulen ist so ausgeführt, dass jeweils die verschiedenen Polpaaren zugeordneten Spulen 23, 28, 33 bzw. 24, 29, 34 miteinander in Reihe liegen. Beide Reihenschaltungen sind über den Schalter 8 parallel an die Netzphase R anschaltbar.

Die beschriebenen Teilwicklungsschaltungen haben den Vorteil, dass sich während der Anlaufphase die auf den Läufer wirkenden magnetischen Kräfte gegenseitig aufheben. Ausserdem können bei diesen Schaltungen alle Spulen gleich ausgeführt werden, d.h. mit gleicher Windungszahl und gleichem Drahtquerschnitt.

## Patentansprüche

1. Teilwicklungsschaltung zum Anfahren von Drehstrommotoren, bei der die als Einschicht ausgeführte Motorwicklung in nacheinander einschaltbare Teilwicklungen unterteilt ist, wobei die zu der zuerst einschaltbaren Teilwicklung gehörenden Spulen (1, 2 und 4, 5) zu mindestens zwei gleichen Parallelzweigen zusammengeschaltet sind und zur Vermeidung eines einseitig auf den Läufer wirkenden magnetischen Zuges räumlich entsprechend symmetrisch versetzt sind, bei welcher Schaltung ferner die zu einer später einschaltbaren Teilwicklung gehörenden Spulen (3, 6) zu mindestens einem weiteren Parallelzweig zusammengeschaltet sind, wobei dieser oder die Parallelzweige die gleiche Windungszahl wie die Parallelzweige der zuerst einschaltbaren Teilwicklung aufweisen, dadurch gekennzeichnet, dass die Motorwicklung eine ungerade Nutzahl (Nuten pro Pol und Phase) und q > 1 aufweist und in nur zwei Teilwicklungen aufgeteilt ist, von denen die zuerst einschaltbare Teilwicklung je Phasenstrang mehr als die Hälfte der Spulen umfasst und dass die jeweils einen Parallelzweig bildenden Spulen (10–13–16, 11–14–17, 12–15–18) oder dass die Parallelzweige der zuerst einschaltbaren Teilwicklung (1–2, 4–5; 20–21–22, 25–26–27, 30–31–32) und die den (die) Parallelzweig(e) der später einschaltbaren Teilwicklung bildenden Spulen (3–6; 23–28–33, 24–29–34) untereinander räumlich um 360°/p versetzt sind, wobei p die Polpaarzahl des Motors ist.

2. Teilwicklungsschaltung nach Anspruch 1 für einen Drehstrommotor mit p=2 und p=3, dadurch gekennzeichnet, dass die zuerst einschaltbare Teilwicklung aus zwei Parallelzweigen von je zwei in Reihe geschalteten Spulen (1, 2 bzw. 4, 5) besteht und die beiden restlichen, die später einschaltbare Teilwicklung bildenden Spulen (3 und 6) ebenfalls in Reihe und als dritter Zweig zu den beiden Zweigen der zuerst einschaltbaren Teilwicklung parallelgeschaltet sind.

## Revendications

1. Circuit à enroulements partiels pour le démarrage de moteurs triphasés, dans lequel l'enroulement du moteur, réalisé sous la forme d'un enroulement à une couche, est subdivisé en enroulements partiels pouvant être branchés successivement, et dans lequel les bobines (1, 2 et 4, 5) appartenant à l'enroulement partiel pouvant être branchées en premier lieu, sont interconnectées pour former au moins deux branches parallèles identiques, et sont décalées de façon correspondante symétriquement dans l'espace afin d'éviter une attraction magnétique agissant unilatéralement sur le rotor, et dans lequel en outre, les bobines (3, 6) appartenant à un enroulement partiel pouvant être branchées ultérieurement sont interconnectées pour former au moins une autre branche parallèle, cette branche parallèle ou les branches parallèles possédant le même nombre de spires que les branches parallèles de l'enroulement partiel pouvant être branchées en premier lieu, caractérisé par le fait que l'enroulement du moteur comporte un nombre impair d'encoches (encoches par pôle et par phase) égal à q > 1 et est subdivisé en seulement deux enroulements partiels, parmi lesquels l'enroulement partiel pouvant être branché en premier lieu comporte, pour chaque conducteur de phase, plus de la moitié des bobines, et que les bobines (10–13–16, 11–14–17, 12–15–18) constituant respectivement une branche parallèle, ou que les branches parallèles de l'enroulement partiel pouvant être branché en premier lieu 1–2,4–5; 20–21–22, 25–26–27, 30–31–32) et les bobines (3–6; 23–28–33; 24–29–34) constituant une branche parallèle de l'enroulement partiel pouvant être branché ultérieurement, sont décalées dans l'espace de 360°/p, p représentant le nombre des couples de pôles du moteur.

2. Circuit à enroulements partiels suivant la revendication 1, pour un moteur triphasé, avec p=2 et q=3, caractérisé par le fait que l'enroulement partiel pouvant être branché en premier lieu est constitué par deux branches parallèles comportant chacune deux bobines (1, 2 ou 4, 5), et que les deux autres bobines (3 et 6), qui constituent l'enroulement partiel pouvant être branché ultérieurement, sont également branchées en série et, en tant que troisième branche, sont branchées en parallèle avec les deux branches du premier enroulement partiel pouvant être branché en premier lieu.

**Claims**

1. A partial-winding circuit for starting three-phase motors, wherein the motor winding is designed as a single layer divided into consecutively switched partial-windings, where the coils (1, 2 and 4, 5) assigned to the partial-winding switched first are interconnected to form at least two identical parallel branches and are spatially staggered so as to be correspondingly symmetrical in order to avoid a one-sided magnetic pull upon the rotor, in which circuit furthermore the coils (3, 6) assigned to a partial-winding which can be switched later are interconnected to form at least one further parallel branch, where the parallel branch or branches has/have the same number of turns as the parallel branches of the partial-winding switched first, characterised in that, the motor winding has an uneven number of grooves (grooves per pole and phase) of q>1 and is only divided into two partial-windings, of which the partial-winding switched first comprises more than half of the coils for each phase, and that the coils (10–13–16, 11–14–17, 12–15–18) which respectively form a parallel branch or that the parallel branches of the partiel-winding (1–2, 4–5; 20–21–22, 25–26–27, 30–31–32) switched first and the coils (3–6; 23–28–33, 24–29–34) which form the parallel branch/branches of the partial winding which can be switched later are spatially staggered by 360°/p, where p is the number of pole of the motor.

2. A partial winding circuit as claimed in Claim 1 for a three-phase motor with p=2 and q=3, characterised in that, the partial-winding switched first consists of two parallel branches of two series-connected coils (1, 2 and 4, 5) in each case and the two remaining coils (3 and 6), which form the partial-winding, which can be switched later, are likewise connected in series and are connected parallel to the two branches of the partial-winding switched first as a third branch.

FIG 1

FIG 2

FIG 3

FIG 4